# EUROPÄISCHE PATENTSCHRIFT

(11) **EP 1 694 603 B1**
(45) Veröffentlichungstag und Bekanntmachung des Hinweises auf die Patenterteilung: **06.01.2010**
(21) Anmeldenummer: 04804589.2
(22) Anmeldetag: 26.11.2004
(51) Int. Cl.: C02F 1/46, C02F 1/461, C25B 13/00, C25B 9/20

(54) **VORRICHTUNG ZUM TRENNEN VON ANIONEN UND KATIONEN EINER SALZHALTIGEN FLÜSSIGKEIT, SOWIE EINRICHTUNG ZUR ABREICHERUNG VON SALZ**
DEVICE FOR THE SEPARATION OF ANIONS AND CATIONS FROM A SALINE FLUID AND DEVICE FOR DESALINATION
DISPOSITIF PERMETTANT DE SEPARER LES ANIONS ET LES CATIONS D'UN LIQUIDE SALIN ET INSTALLATION DE DESSALEMENT

(30) Priorität: 19.12.2003 AT 20572003
(43) Veröffentlichungstag der Anmeldung: 30.08.2006
(73) Patentinhaber: Hydro Ingenieure Umwelttechnik GmbH, 3504 Krems-Stein (AT)
(72) Erfinder: WESNER, Wolfgang, A-1050 Wien (AT)
(74) Vertreter: Müllner, Martin
(86) Internationale Anmeldenummer: PCT/EP2004/053131
(87) Internationale Veröffentlichungsnummer: WO 2005/061392

(56) Entgegenhaltungen:
- DE-A1- 4 142 749
- US-B1- 6 328 875

## Beschreibung

### Technisches Umfeld

Die vorliegende Erfindung betrifft eine Vorrichtung zum Trennen von Anionen und Kationen einer salzhaltigen Flüssigkeit, wie z.B. Meerwasser, bei der zwei mit unterschiedlichen Polen einer Gleichspannungsquelle verbundene Elektroden vorgesehen sind, die in die zu behandelnde Flüssigkeit eintauchen. Sie betrifft weiters eine Einrichtung zur Abreicherung von Salz aus einer salzhaltigen Flüssigkeit.

Um Meerwasser aufzubereiten, verwendet man heute oft Elektrodialyse. Bei dieser werden kationen- und anionenselektive Membrane angebracht, welche den selektiven Übertritt positiver bzw. negativer Ionen in das benachbarte Kompartiment ermöglichen. Dieser Vorgang wird durch ein elektrisches Feld zwischen Anode und Kathode beschleunigt. Dabei strömt die abznreichernde Flüssigkeit im Wesentlichen parallel zu den Elektroden und Membranen. Durch das elektrische Feld wird zusammen mit den selektiven Membranen ein selektiver Übertritt positiv bzw. negativ geladener Ionen in das benachbarte Abteil erzwungen. Dadurch erhält man einerseits ein Konzentrat und anderseits ein Permeat. Bei der Elektrodialyse ist die Notwendigkeit der kosten- und wartungsintensiven Ionenaustauschmembrane nachteilig. Weiters ist es nachteilig, dass ein erheblicher Stromfluss zwischen den Elektroden nötig ist. Eine oxidative bzw. reduktive Zersetzung der abzureichernden Flüssigkeit oder der in ihr gelösten Ionen muss stets erfolgen, um die Ionenwanderung aufrecht zu erhalten.

### Offenbarung der Erfindung

### Technisches Problem

Ziel der Erfindung ist es, diese Nachteile zu vermeiden und eine Einrichtung der eingangs erwähnten Art vorzuschlagen, bei der keine kostspieligen Membranen erforderlich sind, es nur zu einem kleinen Stromfluss kommt und die Zersetzung der behandelten Flüssigkeit sowie der darin gelösten Stoffe weitgehend vermieden wird.

### Technische Lösung

Erfindungsgemäß wird dies bei einer Vorrichtung der eingangs erwähnten Art dadurch erreicht, dass die Elektroden aus einem porösen Material hergestellt sind, dass zwischen diesen Elektroden elektrisch leitende Platten aus einem porösen Material angeordnet sind, dass die Platten und die Elektroden dicht in einer Kammer gehalten sind, dass zwischen den mittleren Platten eine Zuführkammer für die zu behandelnde und unter Druck stehende Flüssigkeit vorgesehen ist und dass an den voneinander abgekehrten Seiten der Elektroden Abzugskammern vorgesehen sind.

Die zwischen den Elektroden angeordneten elektrisch leitenden porösen Platten stellen bipolare Elektroden dar und erhalten daher durch das elektrische Feld selektive Eigenschaften. Den in der hydraulisch bewegten Flüssigkeit befindlichen Anionen und Kationen werden unterschiedliche Widerstände beim Passieren der positiv und negativ geladenen Platten entgegengesetzt, sodass es zu einer selektiven Anreicherung der Anionen in der einen Hälfte der Apparatur und zu einer Anreicherung der Kationen in der anderen Hälfte kommt. Die Elektroneutralität stellt sich unter Dissotiation von Wasser unter Bildung von H⁺ und OH⁻ ein. Die Produkte sind daher Säuren und Basen.

Die porösen Platten haben von sich aus keine selektiven Eigenschaften, die gesamte zu behandelnde Flüssigkeit kann - wenn keine Spannung an die Elektroden angelegt wird - durch die Platten hindurchgepumpt werden. Die Platten lassen sich daher sehr billig herstellen. Die einzelnen Platten können direkt mit einem entsprechenden Potential versorgt werden oder ihr Potential aus ihrer Anordnung im Sinne eines Spannungsteilers beziehen. Die Potentialdifferenz zwischen den einzelnen Platten liegt knapp unter der Zersetzungsspannung von Wasser (1,4V + das Potential, welches nötig ist, um den elektrischen Widerstand der Flüssigkeit zu überwinden).

Die für die Abreicherung der Flüssigkeit erforderliche Energie wird im Wesentlichen durch mechanische Energie zur Erzwingung einer Durchströmung der Elektrodenplatten aufgebracht. Daraus ergibt sich eine wesentlich höhere Trenngeschwindigkeit als dies durch Ionenwanderung der Fall wäre, und ein verringerter Energiebedarf.

Aufgrund der Durchströmung der Platten (bei denen es sich auch um Schüttungen aus elektrisch leitenden Partikeln zwischen Membranen handeln kann), und der Elektroden wird verhindert, dass sich eine Gleichgewichtsverteilung einstellen kann, die das angelegte elektrische Feld egalisiert, wodurch eine weitere Ionenwanderung gestoppt werden würde.

Die angereicherten Ionen stehen in einem Gleichgewicht mit der durch die Platten bzw. Elektroden fließenden Lösung bzw. Flüssigkeit, die in der Lage ist, Ionen in den feldfreien Raum im Inneren der Platte zu verschieben. Die Ionen werden durch die Platten bzw. Elektroden hindurch transportiert und im nächsten Abteil wieder freigesetzt. Die Ladung der nächsten Platte hilft, die geladenen Teilchen weiter in die gleiche Richtung zu transportieren. Es erfolgt ein erneuter Durchtritt, wobei ein Rücktransport aufgrund der Strömung statistisch nicht wahrscheinlich ist.

Die neutrale feldfreie Zone in den Platten entsteht aufgrund der höheren Leitfähigkeit des porösen Plattenmaterials, verglichen mit der umgebenden Flüssigkeit. Die elektrische Leitfähigkeit der Platten soll daher zumindest das 5-fache von Meerwasser betragen.

Es ist zweckmäßig, wenn die Gleichspannungsquelle umpolbar ist. Dadurch ergibt sich der Vorteil, dass durch Umpolen der an die Elektroden angelegten Spannung eine Regeneration der Elektroden erreichbar ist. Dabei kommt es zu einer Vertauschung des Säure- und des Laugenbereichs. Das bewirkt, dass sich Ablagerungen von anorganischen Salzen (z.B. Kalzium- und Magnesiumkarbonate) wieder auflösen und so die inaktivierte Elektrodenoberfläche erneut freigegeben wird. Auf diese Weise kann die Nutungsdauer eines Satzes von Elektroden verlängert werden.

Für eine weitgehende Trennung von Anionen und Kationen ist es vorteilhaft, zwischen der Zuführkammer und einer jeden Elektrode mindestens drei potentialmäßig getrennte Platten vorzusehen. Mit drei Platten lässt sich eine wesentlich bessere Trennung der Anionen und Kationen erreichen als mit zwei oder gar nur einer Platte. Weitere Platten erhöhen die Effizienz der Trennung nicht mehr wesentlich.

Eine Einrichtung zur Abreicherung von Salz aus einer salzhaltigen Flüssigkeit ist erfindungsgemäß **dadurch gekennzeichnet, dass** drei Vorrichtungen, wie oben beschrieben, vorgesehen sind, wobei jede Abzugskammer der ersten Vorrichtung mit einer Zuführkammer der zweiten bzw. dritten Vorrichtung verbunden ist. In der ersten Vorrichtung kommt es zu einer Trennung von Anionen und Kationen. Dabei wird die aufgrund der angelegten Spannung bedingte selektive Permeabilität der Platten ausgenutzt.

Bei der Entsalzung z.B. von Meerwasser ergibt sich die folgende Gesamtreaktion:

NaCl + H₂O → NaOH + HCl

Die Umkehrung dieser Reaktion ist die Neutralisierung einer Säure mit einer Base. Für Natronlauge und Salzsäure liefert diese Neutralisationsreaktion 57kJ/mol Energie. Diese Energie zuzüglich diverser verfahrensbedingter Verluste muss zur Spaltung von NaCl in NaOH und HCl mindestens aufgebracht werden.

In der zweiten und in der dritten Stufe wird die entstandene Säure bzw. Base aufkonzentriert, wobei gleichzeitig ein an Ionen abgereichertes Wasser entsteht.

Die beim Betrieb der erfindungsgemäßen Einrichtung anfallenden Säuren und Basen können zur Regeneration von Anionenaustauschern und Kationenaustauschern verwendet werden.

Es ist günstig, wenn die Abzugskammern der zweiten und der dritten Vorrichtung, aus welchen eine angereicherte Flüssigkeit abziehbar ist, mit einer Reststoffverwertungseinrichtung verbunden sind. Dadurch ist es auf einfache Weise möglich, die aus dem zu behandelnden Wasser abgeschiedenen Stoffe, gegebenenfalls nach einer Raffinierung, weiter zu verwenden.

Um den Wirkungsgrad und die Effizienz der gesamten Einrichtung zu verbessern, ist es vorteilhaft, der Zuführkammer der ersten Vorrichtung einen Ionenaustauscher vorzuschalten. Dabei ist es besonders günstig, dem Ionenaustauscher ein Partikelfilter und gegebenenfalls diesem eine Grobreinigung vorzuschalten, wobei die Porengröße des Partikelfilters unter jener der Platten und Elektroden liegt. Auf diese Weise wird der Zuführkammer der ersten Stufe vorbehandelte Rohflüssigkeit zugeführt, wobei auch sichergestellt ist, dass die zu behandelnde Flüssigkeit, die der Zuführkammer der ersten Stufe zugeführt wird, keine Partikel enthält, die die Poren der Platten und Elektroden verstopfen könnten.

Um die Qualität des gewonnenen abgereicherten Wassers zu verbessern, ist es zweckmäßig, den Abzugskammern der zweiten und dritten Vorrichtung, aus denen eine abgereicherte Flüssigkeit abziehbar ist, einen Ionentauscher und gegebenenfalls eine Nachbearbeitungseinrichtung nachzuschalten.

Um eine Reinigung von Flüssigkeit mit hohem Salzgehalt zu ermöglichen, kann man eine teilweise Rückführung von abgereicherter und gegebenenfalls nachbearbeiteter Flüssigkeit zur zu behandelnden Flüssigkeit vorsehen. Durch diese Maßnahmen wird es ermöglicht, der Zuführkammer der ersten Stufe aufbereitete Rohflüssigkeit zuzuführen, deren Zusammensetzung in relativ engen Grenzen schwankt.

### Kurze Beschreibung von Zeichnungen

Die Erfindung wird nun anhand der beiliegenden Zeichnungen näher erläutert. Dabei zeigt:

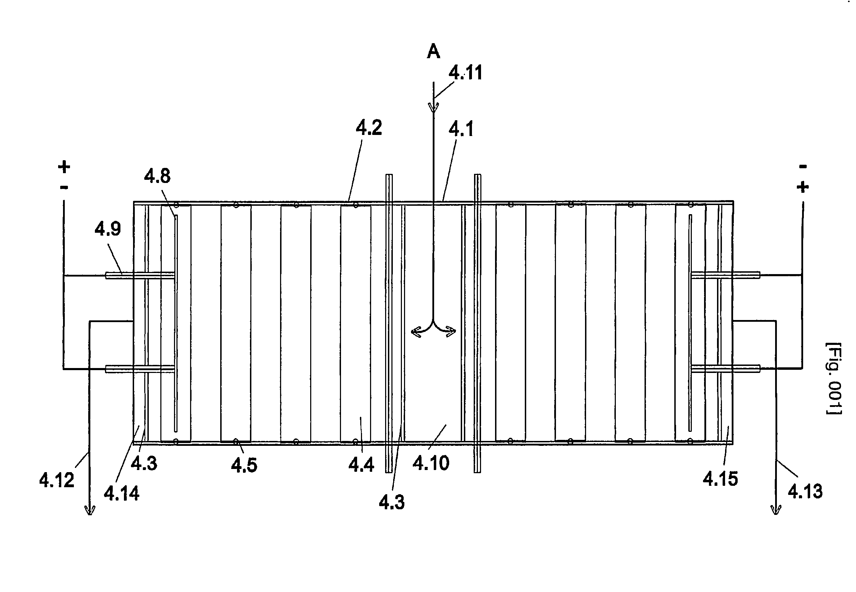

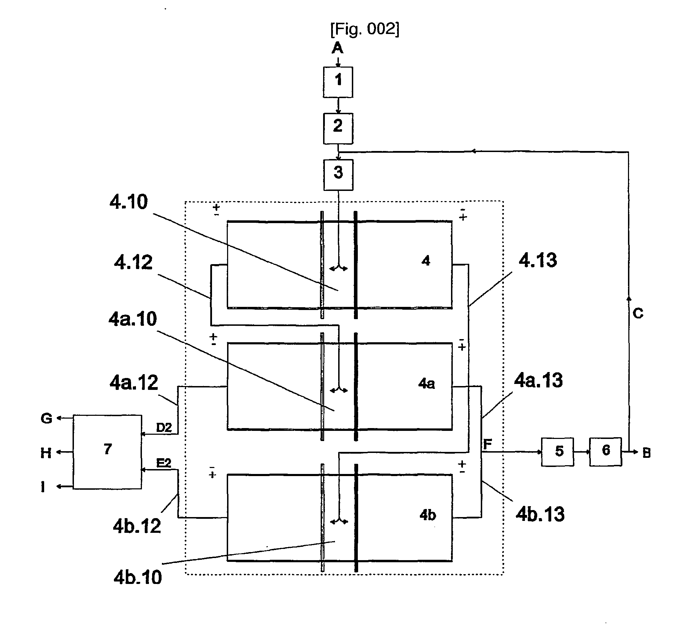

Fig. 1 schematisch eine erfindungsgemäße Vorrichtung zum Trennen von Anionen und Kationen einer salzhaltigen Flüssigkeit; und Fig. 2 schematisch eine Einrichtung zum Abreichern von Salz aus einer salzhaltigen Flüssigkeit mit drei Vorrichtungen gemäß der Fig. 1.

Bei der Vorrichtung nach der Fig. 1 ist ein dichter Behälter 4.1 vorgesehen, in dem eine im Wesentlichen mittig angeordnete Zuführkammer 4.10 angeordnet ist, die von Strömmgsregulatoren 4.3 begrenzt ist. Dabei mündet ein nur schematisch angedeutetes Rohr 4.11 in die Zuführkammer 4.10.

Zu beiden Seiten der Zuführkammer 4.10 sind in gleichmäßigen Abständen poröse Platten 4.4 angeordnet, die aus einem elektrisch gut leitenden porösen Material, wie z.B. Aktivkohle, hergestellt sind.

Dabei sind die Platten 4.4 in Rahmen 4.2 gehalten, die mittels Dichtungen 4.5 in dem Behälter 4.1 dicht gehalten sind. Die beiden äußersten Platten sind als Elektroden 4.8 ausgebildet und mit einer Gleichstromquelle verbunden, die umpolbar ist. Dabei sind isolierte Anschlüsse 4.9 vorgesehen.

Zwischen einer jeden Elektrode 4.8 und der äußersten Wand des Behälters 4.1 sind weitere Strömungsregulatoren 4.3 angeordnet.

Aus den zwischen den Strömmgsregulatoren 4.3 und den benachbarten Wänden des Behälters 4.1 liegenden Abzugsräumen 4.14, 4.15 führen Ableitungen 4.12, 4.13 weg, über die mit Anionen bzw. Kationen angereicherte Flüssigkeit abgezogen werden kann.

Die Einrichtung wird mit Niederdruck betrieben, wobei die zu behandelnde Flüssigkeit A aus der Zuführkammer 4.10 durch die Strömungsregulatoren 4.3 der Zuführkammer 4.10 und in weiterer Folge durch die Platten 4.4 und die beiden Elektrode 4.8 und letztlich auch durch die äußeren Strömungsregulatoren 4.3 hindurch strömt und über die Ableitungen 4.12 und 4.13 aus den Abzugsräumen 4.14, bzw. 4.15 abgeführt wird.

Aufgrund der an die beiden Elektroden 4.8 angelegten Spannung ergeben sich Potentialdifferenzen zwischen den einzelnen Platten 4.4. Auf diese Weise kommt es zu einer Selektionswirkung dieser Platten 4.4. Innerhalb der Platten 4.4 ist infolge der Leitfähigkeit der Platten 4.4 praktisch kein Feld vorhanden, der Transport der Ionen erfolgt in diesem Bereich hauptsächlich durch die Strömung. Die Ladung der nächsten Platte 4.4 hilft, die geladenen Teilchen von der Platte 4.4 in Richtung zu dieser nächsten Platte 4.4 zu transportieren. Ein Rücktransport von Ionen ist aufgrund der Strömung statistisch nicht wahrscheinlich.

Die Einrichtung zum Entsalzen nach der Fig. 2 weist drei Vorrichtungen 4, 4a und 4b auf, die alle den in Fig. 1 gezeigten Aufbau haben. Die zu behandelnde salzhaltige Flüssigkeit A, wie z.B. Meerwasser, gelangt zunächst in eine mechanische Vorreinigung 1, dann in ein Partikelfilter 2, dessen Porengröße kleiner ist als jene der Platten 4.4 und der Elektroden 4.8, und schließlich in einen Ionenaustauscher 3, wobei dieser nach einer Einmündung einer Rückführleitung C angeordnet ist.

Nach dem Durchströmen des Ionenaustauschers 3 strömt das zu behandelnde Wasser in die Zuführkammer 4.10 der ersten Stufe 4 und wie anhand der Fig. 1 beschrieben durch die Platten 4.4 und die Elektroden 4.8.

Über die Ableitungen 4.12 und 4.13 wird basisches (enthält hauptsächlich Anionen und H⁺) bzw. saures Wasser (enthält hauptsächlich Kationen und OH⁻) abgezogen und den Zuführkammern 4a.10 und 4b.10 der beiden weiteren Stufen 4a und 4b zugeführt. Hier werden nun wieder die Anionen und die Kationen getrennt, da aber in einer Vorrichtung nur wenig Anionen und in der anderen nur wenig Kationen vorhanden sind (abgesehen natürlich von H⁺ und OH⁻), ergibt sich nun in jeweils einem Abzugsraum relativ reines Wasser (in der Fig. 2 jeweils im rechten Abzugsraum).

Die Ableitungen 4a.13 und 4b.13 die also weitgehend entsalztes Wasser F liefern, sind miteinander verbunden, und sie sind an einen Ionenaustauscher 5 angeschlossen, auf den eine Nachbehandlungseinrichtung 6 folgt. Aus dieser kann man das entsalzte Wasser B entnehmen.

Ein Teil dieses aufbereiteten entsalzten Wassers wird über eine Rezirkulationsleitung C der über die mechanische Vorreinigung 1 und den Partikelfilter 2 vorbehandelten zu behandelnden Flüssigkeit A zugesetzt, wodurch die Zusammensetzung der in die Zuführkammer 4.10 der ersten Stufe 4 zugeführten Flüssigkeit, insbesondere deren Salzgehalt, entsprechend eingestellt werden kann.

Die beiden Abzugsleitungen 4a.12 und 4b.12 der beiden weiteren Stufen 4a, 4b, über die basisch bzw. sauer angereichertes Wasser D2, E2 abgeführt wird, sind mit einer Reststoffverwertungseinrichtung 7 verbunden, aus der Regenerierungsmittel H für die Ionenaustauscher und Salz I abgezogen wird, sowie Wärme G rückgewonnen werden kann, die z.B. durch die Neutralisationsreaktion eingebracht wird.

Die Wiedergewinnung eines Teiles der Neutralisationsenergie ist essentieller Bestandteil der Erfindung. Eine Anwendung des Systems ohne spezielle Rückgewinnung kann für einfache Kleinanlagen auf Grund der sehr geringen Investitionskosten für die Gesamtanlage sowie des minimalen Wartungsaufwandes wirtschaftlich sein.

Für größere Anlagen bei welchen der Wirkungsgrad des Verfahrens entscheidend ist, ist die Nutzung der Neutralisationsenergie unumgänglich. Die einfachste Realisierung kann durch Verwendung der entstandenen Säuren und Basen zur Regeneration von Anionenaustauschern und Kationenaustauschern erfolgen.

Die bevorzugte Technik ist die Rückgewinnung von elektrischer Energie durch eine elektrochemische Zelle, welche die Reaktion von H⁺ und OH⁻ zu H₂O nutzt. So ein Bedarf an Wärme besteht, etwa in Kombination mit einer Destillation, kann eine Neutralisation zur Wärmeerzeugung im Zusammenhang mit gegenständlichem Verfahren wirtschaftlich eingesetzt werden.

## Patentansprüche

1. Vorrichtung, bei der zwei mit unterschiedlichen Polen einer Gleichspannungsquelle verbundene Elektroden (4.8) vorgesehen sind, die in die zu behandelnde Flüssigkeit eintauchen, wobei die Elektroden (4.8) aus einem porösen Material hergestellt sind und zwischen diesen Elektroden (4.8) elektrisch leitende Platten (4.4) aus einem porösen Material angeordnet sind, **dadurch gekennzeichnet, dass** zum Trennen von Anionen und Kationen einer salzhaltigen Flüssigkeit (A), wie z.B. Meerwasser, die Platten (4.4) und die Elektroden (4.8) dicht in einer Kammer (4.1) gehalten sind, dass zwischen den mittleren Platten (4.4) eine Zuführkammer (4.10) für die zu behandelnde und unter Druck stehende Flüssigkeit (A) vorgesehen ist und dass an den voneinander abgekehrten Seiten der Elektroden (4.8) Abzugskammern (4.14, 4.15) vorgesehen sind, sodass die Flüssigkeit (A) von der Zuführkammer (4.10) durch die Platten (4.4) aus porösem Material hindurch in die Abzugskammern gedrückt wird.

2. Vorrichtung nach Anspruch 2, **dadurch gekennzeichnet, dass** die elektrische Leitfähigkeit der Platten (4.4) zumindest das 5-fache von Meerwasser beträgt.

3. Vorrichtung nach Anspruch 1 oder 2, **dadurch gekennzeichnet, dass** die Gleichspannungsquelle umpolbar ist.

4. Vorrichtung nach einem der Ansprüche 1 bis 3, **dadurch gekennzeichnet, dass** zwischen der Zuführkammer (4.10) und einer jeden Elektrode (4.8) mindestens drei potentialmäßig getrennte Platten (4.4) vorgesehen sind.

5. Einrichtung zur Abreicherung von Salz aus einer salzhaltigen Flüssigkeit (A), **dadurch gekennzeichnet, dass** drei Vorrichtungen (4, 4a, 4b) nach einem der Ansprüche 1 bis 4 vorgesehen sind, wobei jede Abzugskammer (4.14, 4.15) der ersten Vorrichtung (4) mit einer Zuführkammer (4a.10, 4b.10) der zweiten bzw. dritten Vorrichtung (4a, 4b) verbunden ist.

6. Einrichtung nach Anspruch 5, **dadurch gekennzeichnet, dass** die Abzugskammern (4.14, 4.15) der zweiten und der dritten Vorrichtung (4a, 4b), aus welchen eine angereicherte Flüssigkeit abziehbar ist, mit einer Reststoffverwertungseinrichtung (7) verbunden sind.

7. Einrichtung nach Anspruch 5 oder 6, **dadurch gekennzeichnet, dass** der Zuführkammer (4.10) der ersten Vorrichtung (4) ein Ionenaustauscher (3) vorgeschaltet ist.

8. Einrichtung nach Anspruch 7, **dadurch gekennzeichnet, dass** dem Ionenaustauscher (3) ein Partikelfilter (2) und gegebenenfalls diesem eine Grobreinigung (1) vorgeschaltet ist, wobei die Porengröße des Partikelfilters (2) unter jener der Platten (4.4) und Elektroden (4.8) liegt.

9. Einrichtung nach einem der Ansprüche 5 bis 8, **dadurch gekennzeichnet, dass** den Abzugskammern (4.15) der zweiten und dritten Vorrichtung, aus denen eine abgereicherte Flüssigkeit (F) abziehbar ist, ein Ionentauscher (5) und gegebenenfalls eine Nachbearbeitungseinrichtung (6) nachgeschaltet ist.

10. Einrichtung nach einem der Ansprüche 5 bis 9, **dadurch gekennzeichnet, dass** eine teilweise Rückführung von abgereicherter und gegebenenfalls nachbearbeiteter Flüssigkeit (C) zur zu behandelnden Flüssigkeit (A) vorgesehen ist.

## Claims

1. Device in which two electrodes (4.8) connected to different poles of a DC voltage source are provided and are immersed in the liquid to be treated, the electrodes (4.8) being made of a porous material and electrically conductive plates (4 4) made of a porous material being arranged between these electrodes (4.8), **characterised in that** for the separation of anions and cations from a saline fluid (A), such as sea water, the plates (4.4) and the electrodes (4.8) are kept sealed In a chamber (4.1), **in that** a supply chamber (4.10) for the pressurised liquid (A) which is to be treated is provided between the central plates (4.4), and **in that** outlet chambers (4.14, 4.15) are provided on the mutually remote sides of the electrodes (4.8) in such a way that the liquid (A) is pushed from the supply chamber (4.10) through the plates (4.4) made of a porous material into the outlet chambers.

2. Device according to claim 2, **characterised in that** the electrical conductivity of the plates (4.4) is at least 5 times that of sea water.

3. Device according to either claim 1 or claim 2, **characterised in that** the polarity of the DC voltage source can be reversed

4. Device according to any one of claims 1 to 3, **characterised in that** at least three plates (4.4) which are separated in terms of potential are provided between the supply chamber (4.10) and each electrode (4.8).

5. Means for the desalination of a saline fluid (A), **characterised in that** three devices (4, 4a, 4b) according to any one of claims 1 to 4 are provided, each outlet chamber (4.14, 4.15) of the first device (4) being connected to a supply chamber (4a.10, 4b.10) of the second or third device (4a, 4b).

6. Means according to claim 5, **characterised in that** the outlet chambers (4 14, 4.15) of the second and third devices (4a, 4b), from which chambers a desalinated liquid can be withdrawn, are connected to a residual substance evaluation means (7).

7. Means according to either claim 5 or claim 6, **characterised in that** there is an ion exchanger (3) provided upstream from the supply chamber (4.10) of the first device (4).

8. Means according to claim 7, **characterised in that** a particle filter (2) is provided upstream from the ion exchanger (3) and primary cleaning (1) is optionally provided upstream from said filter, the pore-size of the particle filter (2) being less than that of the plates (4.4) and electrodes (4.8).

9. Means according to any one of claims 5 to 8, **characterised in that** an ion exchanger (5) and optionally an aftertreatment means (6) are arranged downstream from the outlet chambers (4.15) of the second and third devices, from which chambers a desalinated liquid (F) can be withdrawn.

10. Means according to any one of claims 5 to 9, **characterised in that** a partial recirculation of desalinated and optionally aftertreated liquid (C) into the liquid (A) to be treated is provided.

## Revendications

1. Dispositif, dans lequel sont prévues deux électrodes (4.8) reliées à différents pôles d'une source de tension continue, qui plongent dans le liquide à traiter, les électrodes (4.8) étant faites d'un matériau poreux et entre ces électrodes (4.8) étant disposées des plaques (4.4) en un matériau poreux, conductrices de l'électricité, **caractérisé en ce que,** pour la séparation d'anions et de cations d'un liquide (A) contenant un sel, comme par exemple l'eau de mer, les plaques (4.4) et les électrodes (4.8) sont maintenues de façon étanche dans une chambre (4.1), **en ce qu'**entre les plaques centrales (4.4) est prévue une chambre d'alimentation (4.10) pour le liquide (A) à traiter et étant sous pression et **en ce que** sur les côtés opposés l'un de l'autre des électrodes (4.8) sont prévues des chambres d'évacuation (4.14, 4.15), de sorte que le liquide (A) est contraint sous pression à passer de la chambre d'alimentation (4.10), à travers les plaques (4.4) en matériau poreux, dans les chambres d'évacuation.

2. Dispositif selon la revendication 2, **caractérisé en ce que** la conductivité électrique des plaques (4.4) est au moins le quintuple de celle de l'eau de mer.

3. Dispositif selon la revendication 1 ou 2, **caractérisé en ce que** la source de tension continue a une polarité qui peut être inversée.

4. Dispositif selon l'une quelconque des revendications 1 à 3, **caractérisé en ce qu'**au moins trois plaques (4.4) séparées par une différence de potentiel sont prévues entre la chambre d'alimentation (4.10) et chaque électrode (4.8).

5. Appareil pour l'appauvrissement en sel à partir d'un liquide (A) contenant un sel, **caractérisé en ce que** sont prévus trois dispositifs (4, 4a, 4b) selon l'une quelconque des revendications 1 à 4, dans lequel chaque chambre d'évacuation (4.14, 4.15) du premier dispositif (4) est reliée à une chambre d'alimentation (4a.10, 4b.10) du deuxième ou, respectivement, du troisième dispositif (4a, 4b).

6. Appareil selon la revendication 5, **caractérisé en ce que** les chambres d'évacuation (4.14, 4.15) du deuxième et du troisième dispositif (4a, 4b), à partir desquelles peut être évacué un liquide enrichi, sont reliées à un dispositif d'utilisation de résidus (7).

7. Appareil selon la revendication 5 ou 6, **caractérisé en ce qu'**un échangeur d'ions (3) est placé avant la chambre d'évacuation (4.10) du premier dispositif (4).

8. Appareil selon la revendication 7, **caractérisé en ce qu'**avant l'échangeur d'ions (3) est placé un filtre à particules (2) et éventuellement avant celui-ci est placé un épurateur primaire (1), la taille de pores du filtre à particules (2) étant inférieure à celle des plaques (4.4) et des électrodes (4,8).

9. Appareil selon l'une quelconque des revendications 5 à 8, **caractérisé en ce qu'**un échangeur d'ions (5) et éventuellement un appareil de post-traitement (6) fait/font suite aux chambres d'évacuation (4.15) du deuxième et du troisième dispositif, à partir desquelles peut être évacué un liquide appauvri (F).

10. Appareil selon l'une quelconque des revendications 5 à 9, **caractérise en ce qu**'est prévu un recyclage partiel de liquidé (C) appauvri et éventuellement post-traité vers le liquide (A) à traiter.
